# EUROPEAN PATENT APPLICATION

(11) **EP 3 016 461 A1**
(43) Date of publication of application: **04.05.2016**
(21) Application number: 14818380.9
(22) Date of filing: 25.06.2014
(51) Int. Cl.: H04W 72/04, H04W 16/32, H04W 52/02, H04W 92/20

(54) **RADIO COMMUNICATION SYSTEM, BASE STATION APPARATUS, TERMINAL APPARATUS, RADIO COMMUNICATION METHOD AND INTEGRATED CIRCUIT**

(30) Priority: 26.06.2013 JP 2013133402
(71) Applicant: Sharp Kabushiki Kaisha, Osaka-shi, Osaka 545-8522 (JP)
(72) Inventor: KATO, Yasuyuki, Osaka 545-8522 (JP); UEMURA, Katsunari, Osaka 545-8522 (JP)
(74) Representative: Müller-Boré & Partner Patentanwälte PartG mbB
(86) International application number: PCT/JP2014/066891
(87) International publication number: WO 2014/208622

(57) **Abstract**

A wireless communication system in which a first base station apparatus and a second base station apparatus communicate with a terminal apparatus through a plurality of cells, in which the first base station apparatus notifies the second base station apparatus of a first discontinuous reception parameter for allowing the terminal apparatus to perform a discontinuous reception operation with respect to the first base station apparatus, and the second base station apparatus determines a second discontinuous reception parameter for allowing the terminal apparatus to perform a discontinuous reception operation with respect to the second base station apparatus based on the first discontinuous reception parameter. Accordingly, the discontinuous reception operation of a mobile station apparatus is efficiently performed at the time of dual connect.

## Description

### TECHNICAL FIELD

The present invention relates to a wireless communication system, a base station apparatus, a terminal apparatus, a wireless communication method, and an integrated circuit.

The present application claims priority to Japanese Patent Application No. 2013-133402 filed in the Japanese Patent Office on June 26, 2013, the disclosure of which is herein incorporated by reference in its entirety.

### BACKGROUND ART

In the 3GPP (3rd generation partnership project), a W-CDMA system has been standardized as a 3rd generation cellular mobile communication system, and services have been launched. HSDPA having a higher communication speed has been also standardized, and services have been launched.

Meanwhile, an evolved 3rd radio access (evolved universal terrestrial radio access: hereinafter, referred to as "EUTRA") technology has been standardized, and services have been launched in the 3GPP. As a downlink communication system of EUTRA, an OFDM (orthogonal frequency division multiplexing) system has been employed that has resistance to multipath interference and is appropriate for high-speed transmission. As an uplink communication system, there has been employed a DFT (discrete Fourier transform)-spread OFDM system of SC-FDMA (single carrier-frequency division multiple access) that can reduce the PAPR (peak-to-average power ratio) of a transmission signal in consideration of cost and power consumption of mobile station apparatuses.

In the 3GPP, discussion on the Advanced-EUTRA which is further evolution of the EUTRA technology has been started. In the Advanced-EUTRA, it is assumed that communication is performed at a maximum transmission rate of 1 Gbps or more in a downlink and at a transmission rate of 500 Mbps or more in an uplink by using a band up to a maximum bandwidth of 100 MHz in the uplink and the downlink.

In the Advanced-EUTRA, it is considered that a maximum bandwidth of 100 MHz is achieved by binding a plurality of bands compatible with the EUTRA such that a mobile station apparatus of the EUTRA can be accommodated. In the Advanced-EUTRA, one band of 20 MHz or less in the EUTRA is called a component carrier (CC). The component carrier is also called a cell. The binding of the bands of 20 MHz or less is called carrier aggregation (CA) (NPL 1).

In the Advanced-EUTRA, it has been examined that a macrocell and small cells present in the coverage of the macrocell, or the small cells are simultaneously connected using the same technique as the carrier aggregation. The small cells being present in the coverage of the macrocell may mean that frequencies are different. NPL 2 discloses that in the communication between the base station apparatus and the mobile station apparatus, control information (control-plane information) is transmitted in the macrocell, and user information (user-plane information) is transmitted in the small cell in a case where the mobile station apparatus is simultaneously connected to the macrocell and the small cell. The technology disclosed in NPL 2 in which the mobile station apparatus is simultaneously connected to the macrocell and the small cell is called dual connect (or dual connectivity).

### CITATION LIST

### [NON PATENT DOCUMENT]

[NON PATENT DOCUMENT 1] 3GPP TS (Technical Specification) 36.300, V11.5.0 (2013-03), Evolved Universal Terrestrial Radio Access (E-UTRA) and Evolved Universal Terrestrial Radio Access Network (E-UTRAN), Overall description Stage2
[NON PATENT DOCUMENT 2] 3GPP TR (Technical Report) 36.842, V0.2.0 (2013-05), Study on Small Cell Enhancements for E-UTRA and E-UTRAN - Higher layer aspects (release 12)

### DISCLOSURE OF THE INVENTION

### Problems to be Solved by the Invention

However, as disclosed in NPL 2, in the communication between the base station apparatus and the mobile station apparatus, in the case where the control information is transmitted and received between the mobile station apparatus and the base station apparatus as the macrocell and the user information is transmitted and received between the mobile station apparatus and the base station apparatus as the small cell, it is necessary to perform control such that the control information and the user information are transmitted from an appropriate cell.

Since the base station apparatuses are connected through a low-speed line having delay, it is considered that the base station apparatus as the macrocell and the base station apparatus as the small cell independently perform the scheduling of downlink and uplink data and the transmission of downlink data with respect to the mobile station apparatus in consideration of the delay of the line between the base station apparatuses.

In order to independently perform the data scheduling, both the base station apparatuses do not know when the other base station apparatus transmit data to the mobile station apparatus. Thus, a discontinuous reception operation performed with respect to one base station apparatus by the mobile station apparatus is not efficient in performing a discontinuous reception operation of the mobile station apparatus at the time of dual connect.

An aspect of the present invention has been made in view of such circumstances, and it is an object of the present invention to provide a wireless communication system, a base station apparatus, a terminal apparatus, a wireless communication method, and an integrated circuit which are capable of efficiently performing a discontinuous reception operation of a terminal apparatus at the time of dual connect.

### Means for Solving the Problems

(1) In order to achieve the aforementioned object, an aspect of the present invention provides the following means. That is, according to an aspect of the present invention, there is provided a wireless communication system in which a first base station apparatus and a second base station apparatus communicate with a terminal apparatus through a plurality of cells, in which the first base station apparatus notifies the second base station apparatus of a first discontinuous reception parameter for allowing the terminal apparatus to perform a discontinuous reception operation with respect to the first base station apparatus, and the second base station apparatus determines a second discontinuous reception parameter for allowing the terminal apparatus to perform a discontinuous reception operation with respect to the second base station apparatus based on the first discontinuous reception parameter.
(2) According to an aspect of the present invention, in the wireless communication system described in (1), the second base station apparatus may notify the first base station apparatus of the second discontinuous reception parameter.
(3) According to an aspect of the present invention, in the wireless communication system described in (2), the first base station apparatus may notify the terminal apparatus of the first discontinuous reception parameter and the second discontinuous reception parameter, and the terminal apparatus may periodically monitor control channels of the first base station apparatus and the second base station apparatus by using the first discontinuous reception parameter and the second discontinuous reception parameter, may extend a monitoring period of the control channel corresponding to the first base station apparatus in a case where data addressed to its own terminal apparatus is detected in the control channel of the first base station apparatus, and may extend a monitoring period of the control channel corresponding to the second base station apparatus in a case where data addressed to the own terminal apparatus is detected in the control channel of the second base station apparatus.
(4) According to an aspect of the present invention, in the wireless communication system described in (3), the second base station apparatus may determine a discontinuous reception start offset of the second discontinuous reception parameter in consideration of a fact that the first base station apparatus and the second base station apparatus are not synchronized.
(5) According to an aspect of the present invention, in the wireless communication system described in (4), the second base station apparatus may configure a discontinuous reception cycle of the second discontinuous reception parameter to n times or 1/n times of a discontinuous reception cycle of the first discontinuous reception parameter.
(6) According to an aspect of the present invention, there is provided a base station apparatus that communicates with a terminal apparatus through a plurality of cells together with a first base station apparatus, in which the base station apparatus is adapted to: receive, from the first base station apparatus, a first discontinuous reception parameter for allowing the terminal apparatus to perform a discontinuous reception operation with respect to the first base station apparatus; and determine a second discontinuous reception parameter for allowing the terminal apparatus to perform a discontinuous reception operation with respect to its own base station apparatus based on the first discontinuous reception parameter.
(7) According to an aspect of the present invention, in the base station apparatus described in (6), the base station apparatus may determine a discontinuous reception start offset of the second discontinuous reception parameter in consideration of a fact that the first base station apparatus and the own base station apparatus are not synchronized.
(8) According to an aspect of the present invention, in the base station apparatus described in (7), the base station apparatus may configure a discontinuous reception cycle of the second discontinuous reception parameter to n times or 1/n times of a discontinuous reception cycle of the first discontinuous reception parameter.
(9) According to an aspect of the present invention, there is provided a terminal apparatus that communicates with a first base station apparatus and a second base station apparatus through a plurality of cells, the terminal apparatus being adapted to: receive a discontinuous reception parameter from the first base station apparatus; monitor periodically control channels of the first base station apparatus and the second base station apparatus by using the discontinuous reception parameter; extend a monitoring period of the control channel corresponding to the first base station apparatus in a case where data addressed to its own terminal apparatus is detected in the control channel of the first base station apparatus; and extend a monitoring period of the control channel corresponding to the second base station apparatus in a case where data addressed to the own terminal apparatus is detected in the control channel of the second base station apparatus.
(10) According to an aspect of the present invention, there is provided a wireless communication method of a wireless communication system in which a first base station apparatus and a second base station apparatus communicate with a terminal apparatus through a plurality of cells, the method including at least: a step of notifying, by the first base station apparatus, the second base station apparatus of a first discontinuous reception parameter for allowing the terminal apparatus to perform a discontinuous reception operation with respect to the first base station apparatus; a step of determining, by the second base station apparatus, a second discontinuous reception parameter for allowing the terminal apparatus to perform a discontinuous reception operation with respect to the second base station apparatus based on the first discontinuous reception parameter; and a step of notifying the first base station apparatus of the second discontinuous reception parameter.
(11) According to an aspect of the present invention, there is provided an integrated circuit applied to a base station apparatus that communicates with a terminal apparatus through a plurality of cells together with a first base station apparatus, the integrated circuit including: means for receiving, from the first base station apparatus, a discontinuous reception parameter for allowing the terminal apparatus to perform a discontinuous reception operation with respect to the first base station apparatus; and means for performing scheduling of a downlink and an uplink for the terminal apparatus in consideration of the discontinuous reception operation of the terminal apparatus based on the discontinuous reception parameter.
(12) According to an aspect of the present invention, there is provided an integrated circuit applied to a base station apparatus that communicates with a terminal apparatus through a plurality of cells together with a first base station apparatus, the integrated circuit including: means for receiving, from the first base station apparatus, a first discontinuous reception parameter for allowing the terminal apparatus to perform a discontinuous reception operation with respect to the first base station apparatus; and means for determining a second discontinuous reception parameter for allowing the terminal apparatus to perform a discontinuous reception operation with respect to the base station apparatus based on the first discontinuous reception parameter.
(13) According to an aspect of the present invention, there is provided an integrated circuit applied to a terminal apparatus that communicates with a first base station apparatus and a second base station apparatus through a plurality of cells, the integrated circuit including: means for receiving a discontinuous reception parameter from the first base station apparatus; means for periodically monitoring control channels of the first base station apparatus and the second base station apparatus by using the discontinuous reception parameter; means for extending a monitoring period of the control channel corresponding to the first base station apparatus in a case where data addressed to its own terminal apparatus is detected in the control channel of the first base station apparatus; and means for extending a monitoring period of the control channel corresponding to the second base station apparatus in a case where data addressed to the own terminal apparatus is detected from the control channel of the second base station apparatus.

### Effects of the Invention

According to the aspect of the present invention, it is possible to efficiently perform a discontinuous reception operation in a mobile station apparatus at the time of dual connect. A base station apparatus can efficiently perform data scheduling on a mobile station apparatus.

### BRIEF DESCRIPTION OF THE DRAWINGS

[Fig. 1] Fig. 1 is a diagram showing an example of the structure of a mobile station apparatus according to an embodiment of the present invention.
[Fig. 2] Fig. 2 is a diagram showing an example of the structure of a base station apparatus according to the embodiment of the present invention.
[Fig. 3] Fig. 3 is a diagram showing an example of a discontinuous reception operation at the time of dual connect of the present invention.
[Fig. 4] Fig. 4 is a diagram showing an example of the discontinuous reception operation at the time of the dual connect of the present invention.
[Fig. 5] Fig. 5 is a diagram showing an example of the structure of a physical channel in EUTRA.
[Fig. 6] Fig. 6 is a diagram showing an example of the structure of a downlink channel in the EUTRA.
[Fig. 7] Fig. 7 is a diagram showing an example of the structure of an uplink channel in the EUTRA.
[Fig. 8] Fig. 8 is a diagram showing an example of the structure of a communication protocol related to control information of the base station apparatus and the mobile station apparatus.
[Fig. 9] Fig. 9 is a diagram showing an example of the structure of a communication protocol related to user information of the base station apparatus and the mobile station apparatus.
[Fig. 10] Fig. 10 is a diagram showing an example of a discontinuous reception operation of the related art.
[Fig. 11] Fig. 11 is a diagram showing an example of the discontinuous reception operation of the related art.
[Fig. 12] Fig. 12 is an explanatory diagram for describing an example of the dual connect.
[Fig. 13] Fig. 13 is an explanatory diagram for describing an example of the dual connect.

### MODE FOR CARRYING OUT THE INVENTION

An OFDM scheme is adopted as a downlink of EUTRA. A single carrier communication scheme of a DFT-spread OFDM scheme is adopted as an uplink of the EUTRA.

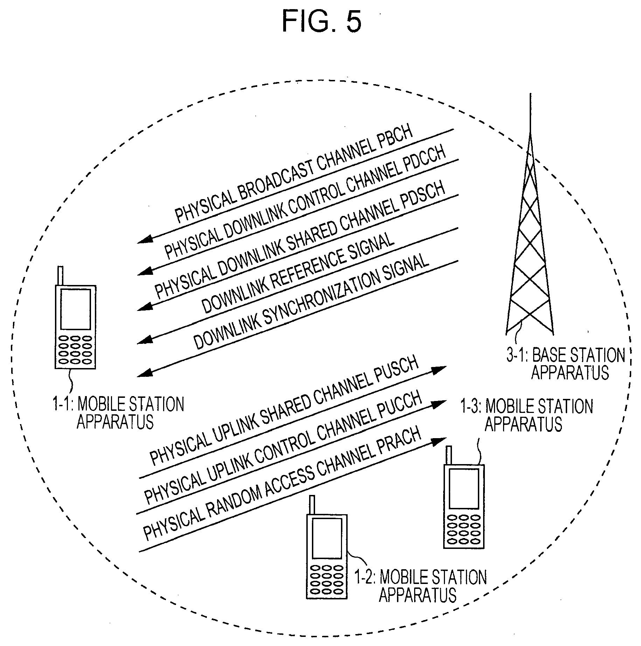

Fig. 5 is a diagram showing the structure of a physical channel of the EUTRA. A physical channel of the downlink includes a physical downlink shared channel PDSCH, a physical downlink control channel PDCCH, and a physical broadcast channel PBCH. In addition, there are physical signals such as a downlink synchronization signal and a downlink reference signal (NPL 1).

A physical channel of the uplink includes a physical random access channel PRACH, a physical uplink shared channel PUSCH, and a physical uplink control channel PUCCH (NPL 1).

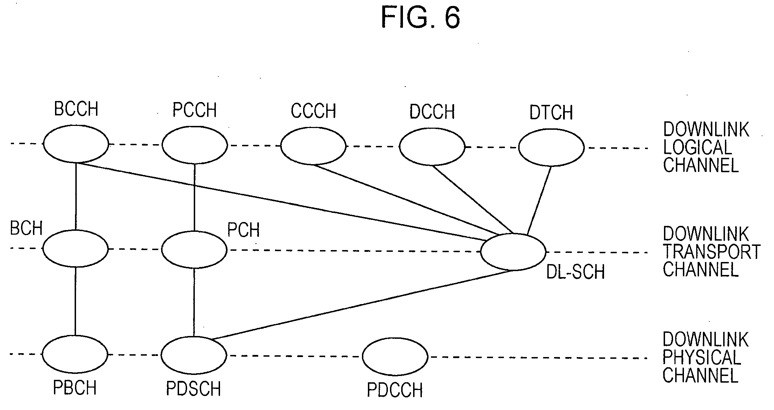

Fig. 6 is a diagram showing a channel structure of the downlink of the EUTRA. The channel of the downlink shown in Fig. 6 includes a logical channel, a transport channel, and a physical channel. The logical channel defines the type of a data transmission service transmitted and received in a medium access control (MAC) layer. The transport channel defines the characteristics of data to be transmitted by a wireless interface and how to transmit the data. The physical channel is a physical channel that delivers data transferred to a physical layer by the transport channel.

The logical channel of the downlink includes a broadcast control channel BCCH, a paging control channel PCCH, a common control channel CCCH, a dedicated control channel DCCH, and a dedicated traffic channel DTCH.

The transport channel of the downlink includes a broadcast channel BCH, a paging channel PCH, and a downlink shared channel DL-SCH.

The physical channel of the downlink includes a physical broadcast channel PBCH, a physical downlink control channel PDCCH, and a physical downlink shared channel PDSCH. These channels are transmitted and received between a base station apparatus and a mobile station apparatus.

Hereinafter, the logical channel will be described. The broadcast control channel BCCH is a downlink channel used to broadcast system control information. The paging control channel PCCH is a downlink channel used to transmit paging information, and is used in a case where a network does not know a cell position of the mobile station apparatus. The common control channel CCCH is a channel used to transmit control information between the mobile station apparatus and the network, and is used by the mobile station apparatus that does not have radio resource control (RRC) connection with the network.

The dedicated control channel DCCH is a point-to-point duplex channel, and is a channel used to transmit individual control information between the mobile station apparatus and the network. The dedicated control channel DCCH is used by the mobile station apparatus having RRC connection. The dedicated traffic channel DTCH is a point-to-point duplex channel, and is a dedicated channel of one mobile station apparatus, and is used to transport user information (unicast data).

Hereinafter, the transport channel will be described. The broadcast channel BCH is broadcasted to all cells according to a fixed or previously defined transmission format. In the downlink shared channel DL-SCH, HARQ (hybrid automatic repeat request), dynamic adaptation radio link control, discontinuous reception (DRX) are supported, and it is necessary for the DL-SCH to be broadcasted to all the cells.

In the paging channel PCH, the DRX is supported, and it is necessary for the PCH to be broadcast to all the cells. The paging channel PCH is mapped to a physical resource dynamically used for the traffic channel or other control channel, that is, the physical downlink shared channel PDSCH.

Hereinafter, the physical channel will be described. The physical broadcast channel PBCH maps the broadcast channel BCH at a cycle of 40 milliseconds. The physical downlink control channel PDCCH is a channel used to notify the mobile station apparatus of the radio resource assignment (downlink assignment) of the downlink shared channel PDSCH, hybrid automatic repeat request (HARQ) information for the downlink data, and an uplink transmission permission (uplink grant) which is the radio resource assignment of the physical uplink shared channel PUSCH. The physical downlink shared channel PDSCH is a channel used to transmit downlink data or paging information.

The physical downlink control channels PDCCHs are arranged in 1 to 3 symbol OFDMs of a resource block from the head of one subframe, and the downlink shared channels PDSCHs are arranged in the remaining OFDM symbols. One subframe includes two resource blocks, and one frame includes 10 subframes. One resource block includes 12 subcarriers and 7 OFDM symbols.

In a case where the base station apparatus notifies the mobile station apparatus of the radio resource assignment of the physical downlink shared channel PDSCH to the mobile station apparatus using the physical downlink control channel PDCCH, a region of the physical downlink shared channel PDSCH assigned to the mobile station apparatus is the physical downlink shared channel PDSCH within the same subframe as the physical downlink control channel PDCCH notified of the downlink assignment.

Hereinafter, the channel mapping will be described. As shown in Fig. 6, in the downlink, the mapping of the transport channel to the physical channel is performed as follows. The broadcast channel BCH is mapped to the physical broadcast channel PBCH. The paging channel PCH and the downlink shared channel DL-SCH are mapped to the physical downlink shared channel PDSCH. The physical downlink control channel PDCCH is independently used as the physical channel.

In the downlink, the mapping of the logical channel to the transport channel is performed as follows. The paging control channel PCCH is mapped to the paging channel PCH. The broadcast control channel BCCH is mapped to the broadcast channel BCH and the downlink shared channel DL-SCH. The shared control channel (CCCH, the dedicated control channel DCCH and the dedicated traffic channel DTCH are mapped to the downlink shared channel DL-SCH.

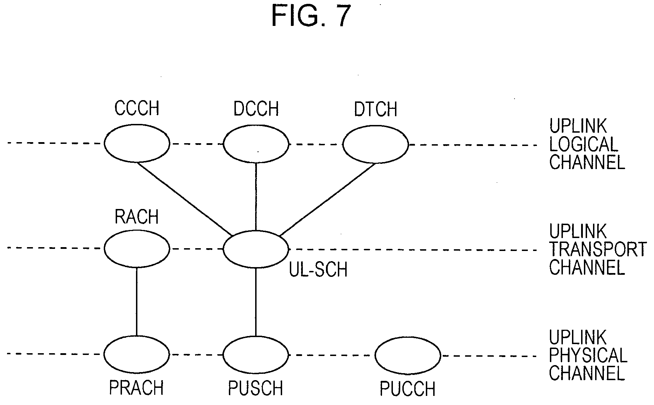

Fig. 7 is a diagram showing a channel structure of an uplink of the EUTRA. The channel of the uplink shown in Fig. 7 includes a logical channel, a transport channel, and a physical channel. The definitions of the channels are the same as those of the channels of the downlink.

The logical channel of the uplink includes a common control channel CCCH, a dedicated control channel DCCH, and a dedicated traffic channel DTCH.

The transport channel of the uplink includes an uplink shared channel UL-SCH, and a random access channel RACH.

The physical channel of the uplink includes a physical uplink control channel PUCCH, a physical uplink shared channel PUSCH, and a physical random access channel PRACH. These channels are transmitted and received between the base station apparatus and the mobile station apparatus. The physical random access channel PRACH is used to transmit a random access preamble for acquiring transmission timing information to the base station apparatus from the mobile station apparatus. The random access preamble is transmitted during a random access procedure.

Hereinafter, the logical channel will be described. The common control channel CCCH is a channel used to transmit control information between the mobile station apparatus and the network, and is used by the mobile station apparatus which does not have radio resource control (RRC) connection with the network.

The dedicated control channel DCCH is a point-to-point duplex channel, and is a channel used to transmit individual control information between the mobile station apparatus and the network. The dedicated control channel DCCH is used by the mobile station apparatus having RRC connection. The dedicated traffic channel DTCH is point-to-point duplex channel, is a dedicated channel of one mobile station apparatus, and is used to transport user information (unicast data).

Hereinafter, the transport channel will be described. In the uplink shared channel UL-SCH, HARQ (hybrid automatic repeat request), dynamic adaptation radio link control, and discontinuous transmission (DTX) are supported. In the random access channel RACH, limited control information is transmitted.

Hereinafter, the physical channel will be described. The physical uplink control channel PUCCH is a channel used to notify the base station apparatus of response information (ACK/NACK) to the downlink data, radio quality information of the downlink, and a transmission request (scheduling request (SR)) of uplink data. The physical uplink shared channel PUSCH is a channel used to transmit the uplink data. The physical random access channel is a channel that is used to transmit the random access preamble.

Hereinafter, the channel mapping will be described. As shown in Fig. 7, in the uplink, the mapping of the transport channel to the physical channel is performed as follows. The uplink shared channel UL-SCH is mapped to the physical uplink shared channel PUSCH. The random access channel RACH is mapped to the.physical random access channel PRACH. The physical uplink control channel PUCCH is independently used as the physical channel.

In the uplink, the mapping of the logical channel to the transport channel is performed as follows. The common control channel CCCH, the dedicated control channel DCCH and the dedicated traffic channel DTCH are mapped to the uplink shared channel UL-SCH.

In the 3 GPP, Advanced-EUTRA which is further evolution of EUTRA has been discussed. In the Advanced-EUTRA, it is assumed that communication is performed at a maximum transmission rate of 1 Gbps or more in the downlink and at a transmission rate of 500 Mbps or more in the uplink by using a band up to a maximum bandwidth of 100 MHz in the uplink and the downlink.

In the Advanced-EUTRA, it is considered that a maximum bandwidth of 100 MHz is achieved by binding a plurality of bands of 20 MHz or less in the EUTRA such that the mobile station apparatus of the EUTRA can be accommodated. In the Advanced-EUTRA, one band of 20 MHz or less in the EUTRA is called a component carrier (CC) (NPL 1). One cell is constructed by binding one downlink component carrier and one uplink component carrier. One cell may be constructed by only one downlink component carrier. By binding a plurality of cells, the base station apparatus and the mobile station apparatus performing communication through the plurality of cells is referred to as carrier aggregation.

One base station apparatus assigns a plurality of cells satisfying the communication capability and communication condition of the mobile station apparatus, and communicates with the mobile station apparatus through the plurality of assigned cells. Among the plurality of cells assigned to the mobile station apparatus, one cell is classified as a first cell (primary cell: PCell), and other cells are classified as second cells (secondary cell: SCell). A special function such as the assignment of the physical uplink control channel PUCCH is configured for the first cell.

In order to reduce the power consumption of the mobile station apparatus, the mobile station apparatus does not perform a downlink reception process on the immediately assigned second cells (or does not follow radio resource assignment information indicated by the physical downlink control channel PDCCH). After the activation of the second cells is instructed from the base station apparatus, the mobile station apparatus starts the downlink reception process on the second cells instructed to be activated (or follows the radio resource assignment information indicated by the physical downlink control channel PDCCH).

After the deactivation of the activated second cells is instructed from the base station apparatus, the mobile station apparatus stops the downlink reception process on the second cells instructed to be deactivated (or does not follow the radio resource assignment information indicated by the physical downlink control channel PDCCH). The second cells which are instructed to be activated from the base station apparatus and on which the downlink reception process is performed are referred to as activated cells, and the second cells immediately assigned to the mobile station apparatus from the base station apparatus and the second cells which are instructed to be deactivated and on which the downlink reception process is stopped are referred to as deactivated cells. The first cell is constantly an activated cell.

In the Advanced-EUTRA, an enhanced physical downlink control channel EPDCCH in which the physical downlink control channel PDCCH is extended is added.

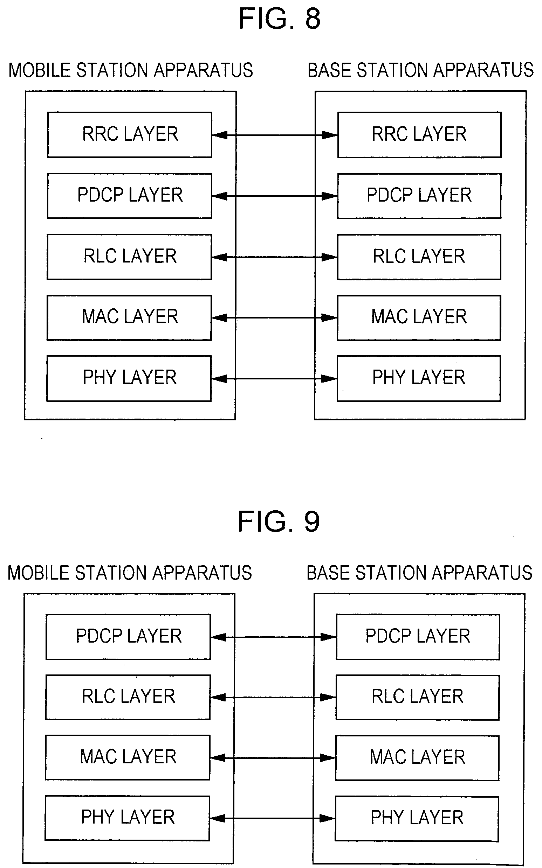

Fig. 8 shows a protocol stack which handles control data of the mobile station apparatus and the base station apparatus of the EUTRA. Fig. 9 is a protocol stack which handles user data of the mobile station apparatus and the base station apparatus of the EUTRA. Figs. 8 and 9 will be described below.

A physical layer (PHY layer) provides a transport service to a higher layer by using the physical channel. The PHY layer is connected to a medium access control layer (MAC layer) as a higher layer by using the transport channel. Data moves between the MAC layer, the PHY layer and layers by using the transport channel. Data is transmitted and received between the PHY layers of the mobile station apparatus and the base station apparatus by using the physical channel.

The MAC layer maps various logical channels to various transport channels. The MAC layer is connected to a radio link control layer (RLC layer) as a higher layer by using the logical channel. The logical channel is greatly classified according to the kind of information to be transported, and is classified into a control channel which transports the control information and a traffic channel which transport the user information. The MAC layer has a function of controlling the PHY layer in order to perform discontinuous reception and transmission (DRX and DTX), a function of notifying of information regarding transmission power, and a function of performing HARQ control.

The MAC layer has a function of notifying of the data amount of a transmission buffer corresponding to each logical channel. This function is referred to as a buffer status report (BSR). By using the BSR, each logical channel is assigned to a logical channel group (LCG), and the base station apparatus is notified of a transmission buffer amount for each LCG as a message of the MAC layer. As an example of a condition in which the BSR is triggered, the BSR is triggered in a case where one regular timer expires, and the BSR is notified.

In a case where the carrier aggregation is performed, the MAC layer has a function of controlling the PHY layer in order to activate/deactivate the cell, and a function of controlling the PHY layer in order to manage an uplink transmission timing.

The RLC layer controls data size such that the higher layer can appropriately transmit data by performing segmentation and concatenation on data received from the higher layer. The RLC layer has a function of guaranteeing QoS (quality of service) required by data. That is, the RLC layer has a function such as retransmission control of data.

A packet data convergence protocol layer (PDCP layer) has a header compression function of compressing unnecessary control information in order to efficiently transport an IP packet which is user data in a wireless section. The PDCP layer has a function of data ciphering.

The radio resource control layer (RRC layer) defines only control information. The RRC layer configures or reconfigures a radio bearer (RB), and controls the logical channel, the transport channel and the physical channel. The RB is classified into a signaling radio bearer (SRB) and a data radio bearer (DRB), and the SRB is used as a path for transmitting an RRC message which is control information. The DRB is used as a path for transmitting user information. The respective RBs are configured between the RRC layers of the base station apparatus and the mobile station apparatus.

The PHY layer corresponds to a physical layer as a first layer in a layered structure of an open systems interconnection (OSI) model that is generally known, the MAC layer, the RLC layer and the PDCP layer correspond to a data link layer as a second layer of the OSI model, and the RRC layer corresponds to a network layer as a third layer of the OSI model.

Hereinafter, discontinuous reception (DRX) control/discontinuous transmission (DTX) control will be described. In the EUTRA, in order for the base station apparatus to efficiently perform radio resource assignment (radio resource scheduling) with respect to each mobile station apparatus and in order to reduce the power consumption of the mobile station apparatus, the discontinuous reception control/discontinuous transmission control are performed. The discontinuous reception control is managed using multiple types of timers. If a discontinuous reception (DRX) parameter (discontinuous reception start offset, a discontinuous reception cycle (DRX cycle), a discontinuous reception period timer (on duration timer), a reception extension period timer (inactivity timer), or a retransmission period timer (retransmission timer)) is received from the base station apparatus, the mobile station apparatus starts the discontinuous reception control by using each timer.

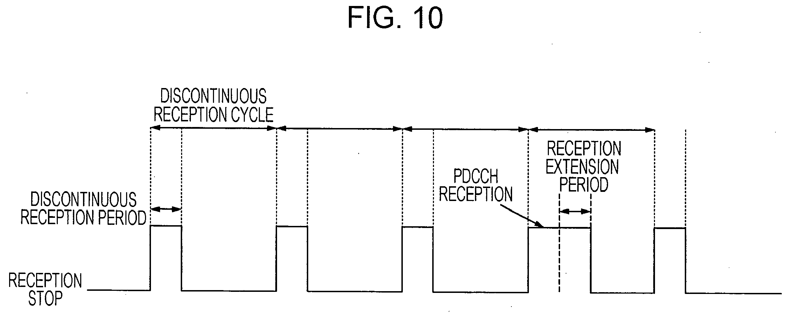

Fig. 10 shows an example of an operation at the time of discontinuous reception. The discontinuous reception cycle is a cycle at which the discontinuous reception is performed, and represents a length of the period from a start position of the discontinuous reception period to a start position of the next discontinuous reception period. The discontinuous reception period is a period during which the physical downlink control channel PDCCH or the enhanced physical downlink control channel EPDCCH is monitored during one discontinuous reception cycle (a period during which the reception process of the physical downlink control channel PDCCH or the enhanced physical downlink control channel EPDCCH is performed during one discontinuous reception cycle). The discontinuous reception period timer is started in the start position of the discontinuous reception.

The retransmission period is a period during which the reception of the downlink data in the physical downlink shared channel PDSCH fails and there is a possibility that the retransmission data will be transmitted from the base station apparatus. The mobile station apparatus monitors the physical downlink control channel PDCCH or the enhanced physical downlink control channel EPDCCH during the retransmission period.

The reception extension period is a period during which the monitoring of the physical downlink control channel PDCCH or the enhanced physical downlink control channel EPDCCH is extended in a case where the downlink assignment/uplink grant addressed to the mobile station apparatus in the physical downlink control channel PDCCH or the enhanced physical downlink control channel EPDCCH is detected. The reception extension period timer is started in the next subframe to the subframe in which the downlink assignment/uplink grant addressed to the mobile station apparatus in the physical downlink control channel PDCCH or the enhanced physical downlink control channel EPDCCH is detected. The discontinuous reception start offset is information related to the start position of the discontinuous reception period.

As the discontinuous reception cycle, there are a long-period discontinuous reception cycle (long DRX cycle) and a short-period discontinuous reception cycle (short DRX cycle). In a case where both the discontinuous reception cycles are configured from the base station apparatus, the mobile station apparatus initially performs the discontinuous reception control during the short-period discontinuous reception cycle, and performs the discontinuous reception control during the long-period discontinuous reception cycle after a predetermined period. A timer value of each timer is expressed as the number of subframes.

During the discontinuous reception control, the mobile station apparatus monitors the physical downlink control channel PDCCH or the enhanced physical downlink control channel EPDCCH for an active time. The active time refers to a period given by the DRX parameter, such as the discontinuous reception period, the retransmission period, and the reception extension period. The active time refers to a period determined by a state of the mobile station apparatus other than the period configured by the DRX parameter.

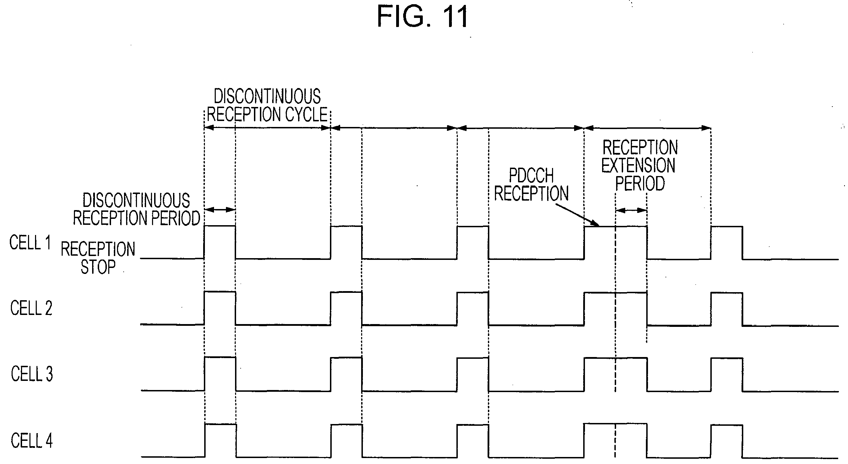

The mobile station apparatus during the carrier aggregation performs the same discontinuous reception operation with respect to all the cells. That is, the mobile station apparatus during the carrier aggregation shown in Fig. 11 monitors the physical downlink control channel PDCCH or the enhanced physical downlink control channel EPDCCH during the same discontinuous reception cycle and discontinuous reception period.

In a case where the mobile station apparatus receives the downlink assignment/uplink grant addressed to the mobile station apparatus in the physical downlink control channel PDCCH or the enhanced physical downlink control channel EPDCCH of one cell, the monitoring period of the physical downlink control channel PDCCH or the enhanced physical downlink control channel EPDCCH is extended in all the cells during the carrier aggregation by the set reception extension period.

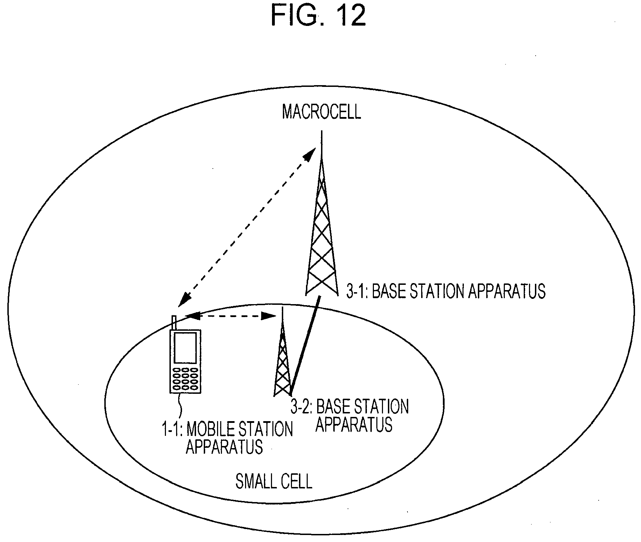

In the Advanced-EUTRA, it has been examined that the mobile station apparatus simultaneously communicates with both the base station apparatuses, as dual connect with two base station apparatuses, as shown in Fig. 12. The dual connect assumes that the mobile station apparatus is connected to the base station apparatus as the macrocell and the base station apparatus as the small cell and the mobile station apparatus and both the base station apparatuses perform the transmission and reception of data through the plurality of cells in a case where the base station apparatus as a macrocell and the base station apparatus as a small cell are connected using not a high-speed backbone line (referred to as backhaul) such as an optical fiber regarded as having no delay but a low-speed backbone line having delay (NPL 2).

Similarly to the carrier aggregation, in the dual connect, the communication is performed between the mobile station apparatus and the base station apparatus by using the macrocell as the first cell (PCell) and the small cell as the second cell (SCell). In the dual connect, the transmission and reception of control data may be performed between the base station apparatus as the macrocell and the mobile station apparatus, and the transmission and reception of user data may be performed between the base station apparatus as the small cell and the mobile station apparatus. The base station apparatus that transmits and receives data may be changed based on the type of data (for example, QoS or logical channel) which is more detailed than the control data and the user data.

In a case where one or both of a transmission timing for each uplink component carrier to the base station apparatus and a reception timing for each downlink component carrier in the mobile station apparatus are different for each cell due to the arrangement relationship of the base station apparatuses, the communication is performed by grouping cells in which the uplink transmission timings are the same. The cells in which the transmission timings are the same being grouped is referred to as a transmission timing group (timing advance group). The MAC layer of the mobile station apparatus has a function of controlling the PHY layer in order to manage the transmission timing group.

In the dual connect, since the base station apparatuses are connected using a low-speed line having delay, the base station apparatus as the macrocell and the base station apparatus as the small cell perform data scheduling of the downlink and the uplink and transmission of the downlink data independently of the mobile station apparatus in consideration of the delay of the line between the base station apparatuses.

In order to independently perform the data scheduling, both the base station apparatuses do not know when the other base station apparatus transmits data to the mobile station apparatus. Thus, in a case where the own base station apparatus transmits data to the mobile station apparatus during the discontinuous reception operation, the own base station apparatus can recognize that the mobile station apparatus extends the reception period, but the base station apparatus is difficult to recognize the reception period extension due to the data transmission from the other base station apparatus. Thus, if the discontinuous reception operation performed with respect to one base station apparatus by the mobile station apparatus is applied as the discontinuous reception operation at the time of the dual connect, the efficiency is degraded.

### (Embodiment)

### [Structure Description]

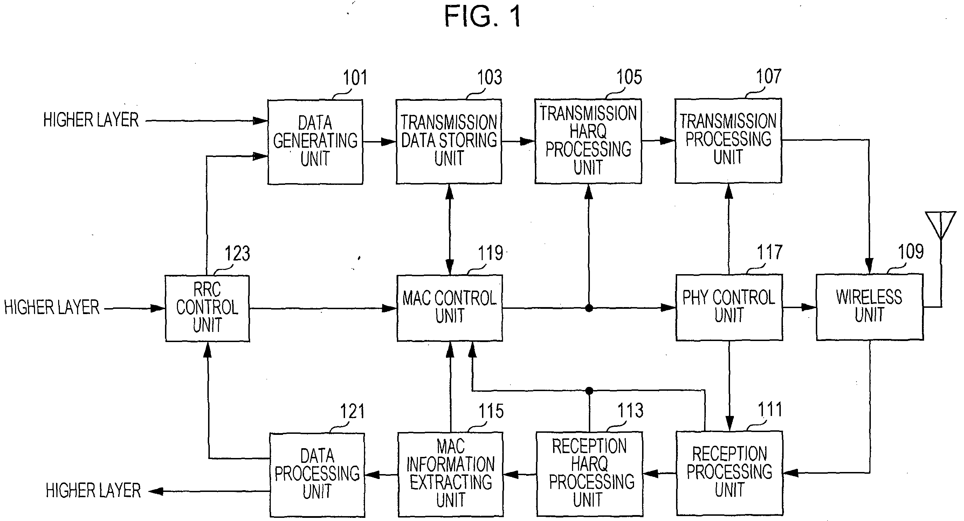

Fig. 1 is a diagram showing the structure of the mobile station apparatus according to the embodiment of the present invention. Each of the mobile station apparatuses 1-1 to 1-3 includes a data generating unit 101, a transmission data storing unit 103, a transmission HARQ processing unit 105, a transmission processing unit 107, a wireless unit 109, a reception processing unit 111, a reception HARQ processing unit 113, a MAC information extracting unit 115, a PHY control unit 117, a MAC control unit 119, a data processing unit 121, and an RRC control unit 123.

The user data from the higher layer and the control data from the RRC control unit 123 are input to the data generating unit 101. The data generating unit 101 has functions of the PDCP layer and the RLC layer. The data generating unit 101 performs the header compression of the IP packet of the user data, the ciphering of data, and processes such as the segmentation and concatenation of data, and controls the data size. The data generating unit 101 outputs the processed data to the transmission data storing unit 103.

The transmission data storing unit 103 stores the data input from the data generating unit 101, and outputs as much instructed data as the data amount instructed based on an instruction from the MAC control unit 119, to the transmission HARQ processing unit 105. The transmission data storing unit 103 outputs information of the data amount of the stored data to the MAC control unit 119.

The transmission HARQ processing unit 105 codes the input data, and performs a puncturing process on the coded data. The transmission HARQ processing unit 105 outputs the punctured data to the transmission processing unit 107, and holds the coded data. In a case where the retransmission of the data is instructed from the MAC control unit 119, the transmission HARQ processing unit 105 performs a puncturing process different from the puncturing process performed in the previous stage on the coded data which is held, and outputs the punctured data to the transmission processing unit 107.

The transmission processing unit 107 modulates and codes the data input from the transmission HARQ processing unit 105. The transmission processing unit 107 performs DFT (discrete Fourier transform) - IFFT (inverse fast Fourier transform) on the demodulated and coded data, inserts a CP (cyclic prefix) into the processed data, arranges the data into which the CP has been inserted in the physical uplink shared channel (PUSCH) of each uplink component carrier (cell), and outputs the data to the wireless unit 109.

In a case where the response of the reception data is instructed from the PHY control unit 117, the transmission processing unit 107 generates an ACK signal or NACK signal, arranges the generated signal in the physical uplink control channel (PUCCH), and outputs the signal to the wireless unit 109. In a case where the transmission of the random access preamble is instructed from the PHY control unit 117, the transmission processing unit 107 generates a random access preamble, arranges the generated signal in the physical random access channel (PRACH), and outputs the signal to the wireless unit 109.

The wireless unit 109 performs up-conversion on the data input from the transmission processing unit 107 so as to have a wireless frequency of transmission position information (transmission cell information) instructed from the PHY control unit 117, and adjusts transmission power to transmit the data through a transmission antenna. The wireless unit 109 performs down-conversion on a wireless signal received by a reception antenna, and outputs the converted signal to the reception processing unit 111.

The reception processing unit 111 performs the FFT (fast Fourier transform) process, the decoding process, and the demodulation process on the signal input from the wireless unit 109. The reception processing unit 111 demodulates the physical downlink control channel PDCCH or an enhanced physical downlink control channel EPDCCH, demodulates the physical downlink shared channel PDSCH based on the downlink assignment information in a case where the downlink assignment information of the mobile station apparatus is detected, and outputs the acquisition of the downlink assignment information to the MAC control unit 119.

The reception processing unit 111 outputs the data of the demodulated physical downlink shared channel PDSCH to the reception HARQ processing unit 113. The reception processing unit 111 demodulates the physical downlink control channel PDCCH or the enhanced physical downlink control channel EPDCCH, and outputs the acquired response information to the MAC control unit 119 in a case where the uplink transmission permission information (the uplink grant) and the response information (ACK/NACK) of the uplink transmission data are detected. The uplink transmission permission information includes data modulation and coding schemes, data size information, HARQ information, and transmission position information.

The reception HARQ processing unit 113 performs the decoding process on the input data from the reception processing unit 111, and outputs the data to the MAC information extracting unit 115 in a case where the decoding process succeeds. The reception HARQ processing unit 113 stores data on which the decoding process fails in a case where the decoding process fails on the input data. In a case where the retransmission data is received, the reception HARQ processing unit 113 combines the held data with the retransmission data, and performs the decoding process. The reception HARQ processing unit 113 notifies the MAC control unit 119 of whether or not the decoding process has succeeded on the input data.

The MAC information extracting unit 115 extracts the control data of the MAC layer (medium access control layer) from the data input from the reception HARQ processing unit 113, and outputs the extracted MAC control information to the MAC control unit 119. The MAC information extracting unit 115 outputs remaining data to the data processing unit 121. The data processing unit 121 has functions of the PDCP layer and the RLC layer, performs a function of decompressing the compressed IP header, a function of decoding the ciphered data and processes such as the segmentation and concatenation of data, and returns the data to an original one. The data processing unit 121 divides the data into the RRC message and the user data, outputs the RRC message to the RRC control unit 123, and outputs the user data to the higher layer.

The PHY control unit 117 controls the transmission processing unit 107, the wireless unit 109 and the reception processing unit 111 in response to the instruction from the MAC control unit 119. The PHY control unit 117 notifies the transmission processing unit 107 of the modulation and coding schemes and the transmission position from the modulation and coding schemes, the transmission information and the transmission position information (transmission cell information) notified from the MAC control unit 119, and notifies the wireless unit 109 of transmission power information and frequency information of the transmission cell. The PHY control unit 117 performs ON/OFF control of power on the transmission processing unit 107, the wireless unit 109 and the reception processing unit 111 in response to the instruction of the MAC control unit 119.

The MAC control unit 119 has a function of the MAC layer, and controls the MAC layer based on the information acquired from the RRC control unit 123 or the lower layer. The MAC control unit 119 determines a data transmission destination and a data transmission priority based on data transmission control configuration designated from the RRC control unit 123 and data amount information acquired from the transmission data storing unit 103 and uplink transmission permission information acquired from the reception processing unit 111, and notifies the transmission data storing unit 103 of information regarding the data to be transmitted. The MAC control unit 119 notifies the transmission HARQ processing unit 105 of HARQ information, and outputs modulation and cording schemes and transmission position information (transmission cell information) to the PHY control unit 117.

The MAC control unit 119 acquires response information to the uplink transmission data from the reception processing unit 111, and instructs the transmission HARQ processing unit 105 and the PHY control unit 117 to perform the retransmission in a case where the response information indicates NACK (negative acknowledge). In a case where information of whether or not the decoding process has succeeded on the data from the reception HARQ processing unit 113, the MAC control unit 119 instructs the PHY control unit 117 to transmit an ACK signal or a NACK signal.

In a case where the discontinuous reception (DRX) control information and the activation/deactivation instruction information of the cell (or component carrier) of the MAC control information input from the MAC information extracting unit 115 are acquired, the MAC control unit 119 controls the PHY control unit 117 in order to operation start/operation stop control of the wireless unit 109, the transmission processing unit 107 and the reception processing unit 111 in order to perform the activation/deactivation control and discontinuous reception control.

The MAC control unit 119 applies each timer of the discontinuous reception parameter acquired from the RRC control 123 to each cell (or each base station apparatus). The MAC control unit 119 determines a discontinuous reception start frame based on the discontinuous reception start offset and the discontinuous reception cycle. In a case where the frame arrives at the discontinuous reception start frame, the MAC control unit 119 instructs the PHY control unit 117 to start the operations of the transmission processing unit 107, the wireless unit 109 and the reception processing unit 111 by starting the discontinuous reception period timers of all the cells. If the discontinuous reception period timer expires, the MAC control unit 119 instructs the PHY control unit 117 to stop the operations of the transmission processing unit 107, the wireless unit 109 and the reception processing unit 111.

In the case where the mobile station apparatus is in the dual connect state, in a case where the MAC control unit 119 acquires the downlink assignment/uplink grant information from the reception processing unit 111 while the discontinuous reception period timer is running, the MAC control unit 119 starts the reception extension period timer of an appropriate cell in consideration of whether or not the downlink assignment/uplink grant information is the downlink assignment/uplink grant information of which base station apparatus.

In the case where the mobile station apparatus is not in the dual connect state, in a case where the MAC control unit 119 acquires the downlink assignment/uplink grant information from the reception processing unit 111 while the discontinuous reception period timer is running, the MAC control unit starts the reception extension period timers of all the cells, and instructs the PHY control unit 117 to start the operations of the transmission processing unit 107, the wireless unit 109 and the reception processing unit 111. If the discontinuous reception period timer expires, the MAC control unit 119 instructs the PHY control unit 117 to stop the operations of the transmission processing unit 107, the wireless unit 109 and the reception processing unit 111.

In a case where any timer of the reception extension period timer and the discontinuous reception period timer is running, the MAC control unit 119 does not instruct the PHY control unit 117 to stop the operations of the transmission processing unit 107, the wireless unit 109 and the reception processing unit 111. In a case where both the timers of the reception extension period timer and the discontinuous reception timer expire, the MAC control unit 119 instructs the PHY control unit 117 to stop the operations of the transmission processing unit 107, the wireless unit 109 and the reception processing unit 111.

In a case where it is determined that the reception of the downlink data fails and there is a possibility that the retransmission data will be transmitted from the base station apparatus 3-1 or the base station apparatus 3-2, the MAC control unit 119 instructs the PHY control unit 117 to start the operations of the transmission processing unit 107, the wireless unit 109 and the reception processing unit 111. If the retransmission period timer expires, the MAC control unit 119 instructs the PHY control unit 117 to stop the operations of the transmission processing unit 107, the wireless unit 109 and the reception processing unit 111.

The MAC control unit 119 outputs the transmission timing information of the MAC control information input from the MAC information extracting unit 115 to the PHY control unit 117. The MAC control unit 119 manages the uplink transmission timing, and controls the PHY control unit 117.

The MAC control unit 119 manages whether the uplink transmission timing is valid or invalid by using the transmission timing timer. The MAC control unit 119 includes the transmission timing timer for each cell or each transmission timing group, and starts or restarts a corresponding transmission timing timer in a case where the transmission timing information is applied to each cell or each transmission timing group.

The MAC control unit 119 creates a buffer status report (BSR) which is data amount information stored in the transmission data storing unit 103, and outputs the created report to the transmission data storing unit 103. The MAC control unit 119 creates a power headroom report (PHR) which is transmission power information for each cell, and outputs the created report to the transmission data storing unit 103.

The RRC control unit 123 performs connection and disconnection processes with respect to the base station apparatus 3-1, and various configurations for communicating with the base station apparatus 3-1 and the base station apparatus 3-2 such as configuration of carrier aggregation, configuration of dual connect and data transmission control configuration of the control data and the user data. The RRC control unit 123 transmits and receives information to and from the higher layer according to various configurations, and controls the lower layer according to the various configurations.

The RRC control unit 123 creates the RRC message, and outputs the created RRC message to the data generating unit 101. The RRC control unit 123 analyzes the RRC message input from the data processing unit 121. The RRC control unit 123 creates the message indicating the transmission capability of the mobile station apparatus, and outputs the created message to the data generating unit 101. The RRC control unit 123 outputs information necessary for the MAC layer to the MAC control unit 119, and outputs information necessary for the physical layer to the PHY control unit 117.

In a case where the discontinuous reception parameter (the discontinuous reception start offset, the discontinuous reception cycle (DRX cycle), the discontinuous reception period timer (on duration timer), the reception extension period timer (inactivity timer) and the retransmission period timer (retransmission timer)) is acquired, the RRC control unit 123 outputs the discontinuous reception parameter to the MAC control unit 119. In a case where the base station apparatus recognizes the communication with the base station apparatus 3-1 and the base station apparatus 3-2 through the dual connect, the RRC control unit 123 notifies the MAC control unit 119 of the dual connect state.

The transmission processing unit 107, the wireless unit 109, the reception processing unit 111 and the PHY control unit 117 perform the operation of the physical layer, the transmission data storing unit 103, the transmission HARQ processing unit 105, the reception HARQ processing unit 113, the MAC information extracting unit 115 and the MAC control unit 119 perform the operation of the MAC layer, the data generating unit 101 and the data processing unit 121 perform the operations of the RLC layer and the PDCP layer, and the RRC control unit 123 performs the operation of the RRC layer.

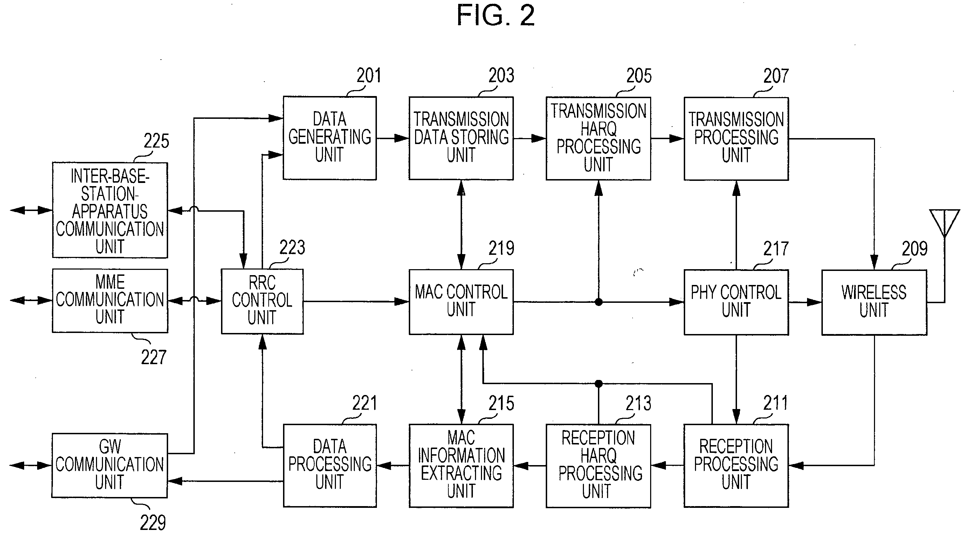

Fig. 2 is a diagram showing the structure of the base station apparatus according to the embodiment of the present invention. The base station apparatus 3-1 or the base station apparatus 3-2 includes a data generating unit 201, a transmission data storing unit 203, a transmission HARQ processing unit 205, a transmission processing unit 207, a wireless unit 209, a reception processing unit 211, a reception HARQ processing unit 213, a MAC information extracting unit 215, a PHY control unit 217, a MAC control unit 219, a data processing unit 221, an RRC control unit 223, an inter-base-station-apparatus communication unit 225, an MME communication unit 227, and a GW communication unit 229.

The user data from the GW communication unit 229 and the control data from the RRC control 223 are input to the data generating unit 201. The data generating unit 201 has functions of the PDCP layer and the RLC layer, compresses the header of the IP packet of the user data and ciphers the data, performs processes such as the segmentation and concatenation of the data, and adjusts the data size. The data generating unit 201 outputs the processed data and the logical channel information of the data to the transmission data storing unit 203.

The transmission data storing unit 203 stores the data input from the data generating unit 201 for each user, and outputs as much the data of the user instructed based on the instruction from the MAC control unit 219 as the instructed data amount to the transmission HARQ processing unit 205. The transmission data storing unit 203 outputs information of the data amount of the stored data to the MAC control unit 219.

The transmission HARQ processing unit 205 codes the input data, and performs a puncturing process on the coded data. The transmission HARQ processing unit 205 outputs the punctured data to the transmission processing unit 207, and holds the coded data. In a case where the retransmission of the data is instructed from the MAC control unit 219, the transmission HARQ processing unit 205 performs a puncturing process different from the puncturing process performed in the previous stage on the coded data being held, and outputs the punctured data to the transmission processing unit 207.

The transmission processing unit 207 modulates and codes the data input from the transmission HARQ processing unit 205. The transmission processing unit 207 maps the modulated and coded data to each channel and signal such as the physical downlink control channel PDCCH, downlink synchronization signal, the physical broadcast channel PBCH and the physical downlink shared channel PDSCH of each cell, performs serial/parallel conversion, IFFT (inverse fast Fourier transform) and OFDM signal processing such as CP insertion on the mapped data, and generates OFDM signals.

The transmission processing unit 207 outputs the generated OFDM signals to the wireless unit 209. In a case where the response of the reception data is instructed from the MAC control unit 219, the transmission processing unit 207 generates the ACK or NACK signal, arranges the generated signal in the physical downlink control channel PDCCH, and outputs the signal to the wireless unit 209.

The wireless unit 209 performs up-conversion on the data input from the transmission processing unit 207 to have a wireless frequency, and adjusts transmission power to transmit the data from a transmission antenna. The wireless unit 209 performs down-conversion on the wireless signal received by a reception antenna, and outputs the signal to the reception processing unit 211. The reception processing unit 211 performs an FFT (fast Fourier transform) process, a decoding process and a demodulation process son the signal input from the wireless unit 209.

The reception processing unit 211 outputs the data of the physical uplink shared channel PUSCH of the demodulated data to the reception HARQ processing unit 213. The reception processing unit 211 outputs response information (ACK/NACK), downlink radio quality information (CQI) and uplink transmission request information (scheduling request) of the downlink transmission data of the control data acquired from the physical uplink control channel PUCCH of the demodulated data to the MAC control unit 219.

The reception HARQ processing unit 213 performs the decoding process on the input data from the reception processing unit 211, and outputs the data to the MAC information extracting unit 215 in a case where the decoding process succeeds. In a case where the decoding process fails on the input data, the reception HARQ processing unit 213 holds the data on which the decoding process fails. In a case where the retransmission data is received, the reception HARQ processing unit 213 combines the held data with the retransmission data, and performs the decoding process. The reception HARQ processing unit 213 notifies the MAC control unit 219 of whether or not the decoding process has succeeded on the input data.

The MAC information extracting unit 215 extracts the control data of the MAC layer from the data input from the reception HARQ processing unit 213, and outputs the extracted control information to the MAC control unit 219. The MAC information extracting unit 215 outputs the remaining data to the data processing unit 221. The data processing unit 221 has functions of the PDCP layer and the RLC layer, performs a function of decompressing the compressed IP header or a deciphering function of the ciphered data and processes such as the segmentation and concatenation of the data, and returns the data to the original one. The data processing unit 221 divides the data into the RRC message and the user data, outputs the RRC message to the RRC control unit 223, and outputs the user data to the higher layer.

The MAC control unit 219 has the function of the MAC layer, and controls the MAC layer based on the information acquired from the RRC control unit 223 or the higher layer. The MAC control unit 219 performs the scheduling process of the downlink and the uplink. The MAC control unit 219 performs the scheduling process of the downlink and the uplink from a reception operation state of the mobile station apparatus 1-1, the data amount information for each user acquired from the transmission data storing unit 203, the control information input from the MAC information extracting unit 215, and response information (ACK/NACK), downlink radio quality information (CQI) and uplink transmission request information (scheduling request) of the downlink transmission data input from the reception processing unit 211. The MAC control unit 219 outputs the scheduling result to the transmission processing unit 207.

The MAC control unit 219 acquires the response information to the uplink transmission data from the reception processing unit 211, and instructs the transmission HARQ processing unit 205 and the transmission processing unit 207 to perform retransmission in a case where the response information indicates the NACK (negative acknowledge). In a case where the information about whether or not the decoding process of the data succeeds is acquired from the reception HARQ processing unit 213, the MAC control unit 219 instructs the transmission processing unit 207 to transmit the ACK or NACK signal.

The MAC control unit 219 performs the activation/deactivation process of the cell (or the component carrier) assigned to the mobile station apparatus 1-1 and the management of the uplink transmission timing. The MAC control unit determines a reception operation state of the mobile station apparatus 1-1 from a discontinuous reception parameter acquired from the RRC control unit 223.

The RRC control unit 223 performs the connection and disconnection processes with respect to the mobile station apparatus 1-1, and various configurations for communicating with the mobile station apparatus 1-1 such as the configuration of the carrier aggregation, the configuration of the dual connect and the data transmission control configuration indicating the cell in which the user data and the control data of the mobile station apparatus 1-1 are transmitted and received, transmits and receives information to and from the higher layer according to the various configurations, and controls the lower layer according to the various configurations.

The RRC control unit 223 creates various RRC messages, and outputs the created RRC messages to the data generating unit 201. The RRC control unit 223 analyzes the RRC message input from the data processing unit 221. In a case where a message indicating the transmission and reception capability of the mobile station apparatus is acquired from the mobile station apparatus 1-1, the RRC control unit 223 performs the configuration of the carrier aggregation or the configuration of the dual connect appropriate from the mobile station apparatus 1-1 based on the transmission and reception capability information of the mobile station apparatus.

The RRC control unit 223 outputs information necessary for the MAC layer to the MAC control unit 219, and outputs information necessary for the physical layer to the PHY control unit 217. In a case where the handover or the dual connect is performed, the RRC control unit 223 notifies the inter-base-station-apparatus communication unit 225 and the MME communication unit 227 of necessary information. In a case where the dual connect is performed, the inter-base-station-apparatus communication unit 225 is also notified of the discontinuous reception parameter applied to the mobile station apparatus 1-1.

The inter-base-station-apparatus communication unit 225 communicates with another base station apparatus, and transmits a control message between the base station apparatuses, which is input from the RRC control unit 223, to another base station apparatus. The inter-base-station-apparatus communication unit 225 receives the control message between the base station apparatuses from another base station apparatus, and outputs the received control message to the RRC control unit 223. The control message between the base station apparatuses includes a control message related to the handover and a control message related to the dual connect.

The MME communication unit 227 communicates with a mobility management entity (MME), and transmits a control message between the base station apparatus and the MME, which is input from the RRC control unit 223, to the MME. The MME communication unit 227 receives the control message between the base station apparatus and the MME from the MME, and outputs the received control message to the RRC control unit 223. The control message between the base station apparatus and the MME includes a path switch request message and a path switch request response message.

The inter-GW communication unit 229 communicates with the GW, receives the user data of the mobile station apparatus which is sent from the GW, and outputs the received data to the data generating unit 201. The inter-GW communication unit 229 transmits the user data of the mobile station apparatus which is input from the data processing unit 221 to the GW.

The transmission processing unit 207, the wireless unit 209 and the reception processing unit 211 perform the operation of the PHY layer, the transmission data storing unit 203, the transmission HARQ processing unit 205, the reception HARQ processing unit 213, the MAC information extracting unit 215 and the MAC control unit 219 perform the operation of the MAC layer, the data generating unit 201 and the data processing unit 221 perform the operations of the RLC layer and the PDCP layer, and the RRC control unit 223 performs the operation of the RRC layer.

### [Operation Description]

The wireless communication system described with reference to Figs. 5 to 9 is assumed. As shown in Fig. 5, the base station apparatus 3-1 communicates with the plurality of mobile station apparatuses 1-1, 1-2 and 1-3. The wireless communication system in which the base station apparatus 3-1 as the macrocell and the base station apparatus 3-2 as the small cell communicate with the mobile station apparatus 1-1 through the plurality of cells shown in Fig. 12 is assumed.

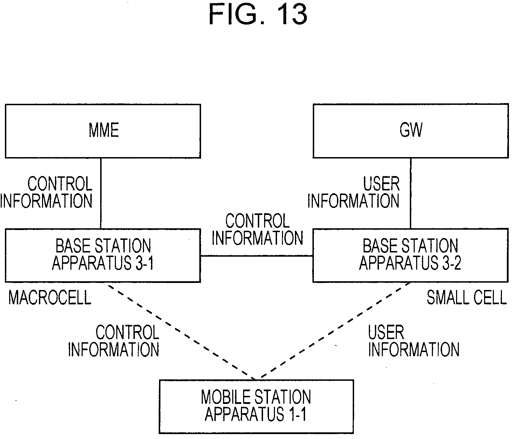

The mobile station apparatus 1-1 shown in Fig. 13 is connected to the base station apparatus 3-1 and the base station apparatus 3-2 through the dual connect. At least the control information (control-plane information) of the mobile station apparatus 1-1 is transmitted and received between the base station apparatus 3-1 as the macrocell and the MME (mobility management entity). At least the user information (user-plane information) of the mobile station apparatus 1-1 is transmitted and received between the base station apparatus 3-2 as the small cell and the GW (gateway). The control information for controlling the mobile station apparatus 1-1 is transmitted and received between the base station apparatus 3-1 as the macrocell and the base station apparatus 3-2 as the small cell.

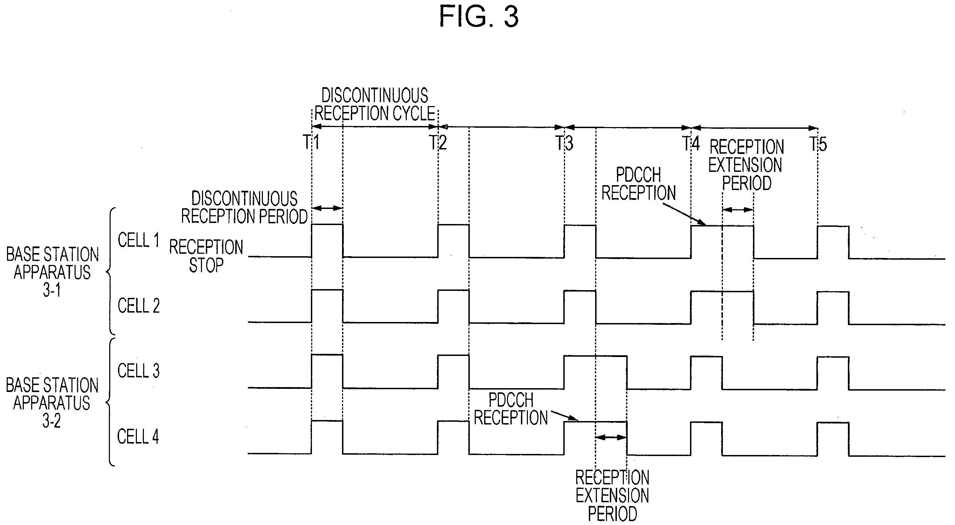

Fig. 3 is a diagram showing an example of the discontinuous reception operation at the time of the dual connect according to the embodiment of the present invention. Hereinafter, the base station apparatus as the macrocell is described as the base station apparatus 3-1, and the base station apparatus as the small cell is described as the base station apparatus 3-2. The base station apparatus 3-1 as the macrocell communicates with the mobile station apparatus 1-1 in the cell 1 and the cell 2, and the base station apparatus 3-2 communicates with the mobile station apparatus 1-1 in the cell 3 and the cell 4. That is, an example in which the mobile station apparatus 1-1 communicates with the base station apparatus 3-1 and the base station apparatus 3-2 by simultaneously using the cell 1, the cell 2, the cell 3 and the cell 4 will be described.

After it is determined to communicate with the mobile station apparatus 1-1 through the dual connect with the base station apparatus 3-2, or after the dual connect configuration for the mobile station apparatus 1-1 is ended, the base station apparatus 3-1 notifies the base station apparatus 3-2 of the discontinuous reception parameter (the discontinuous reception start offset, the discontinuous reception cycle (DRX cycle), the discontinuous reception period timer (on duration timer), the reception extension period timer (inactivity timer), and the retransmission period timer (retransmission timer)) configured for the mobile station apparatus 1-1 by the base station apparatus 3-1. The base station apparatus 3-1 transmits the discontinuous reception parameter to the base station apparatus 3-2, and then notifies the mobile station apparatus 1-1 of the discontinuous reception parameter.

If the discontinuous reception parameter is received from the base station apparatus 3-1, the mobile station apparatus 1-1 configures the same discontinuous reception parameter for all the cells. The base station apparatus 3-1 and the base station apparatus 3-2 perform the scheduling of the downlink data and uplink data transmission during the discontinuous reception period, the reception extension period and the retransmission period of the mobile station apparatus 1-1 based on the discontinuous reception parameter configured for the mobile station apparatus 1-1. The mobile station apparatus 1-1 starts the discontinuous reception based on the discontinuous reception parameter received from the base station apparatus 3-1.

As shown in Fig. 3, the mobile station apparatus 1-1 monitors the physical downlink control channels PDCCHs or the enhanced physical downlink control channels EPDCCHs of the cell 1, the cell 2, the cell 3 and the cell 4 during the same reception start position, the same discontinuous reception period and the same discontinuous reception cycle for the cell 1, the cell 2, the cell 3 and the cell 4. The mobile station apparatus 1-1 determines the start position T1 and reception start positions (T2, T3, T4, T5, ...) subsequent to the start position T1 of the discontinuous reception period based on the discontinuous reception cycle and the discontinuous reception start offset.

In a case where the discontinuous reception period arrives at the start positions (T1, T2, T3, T4 and T5 in Fig. 3), the mobile station apparatus 1-1 starts the discontinuous reception period timer, and starts to monitor the physical downlink control channel PDCCH or the enhanced physical downlink control channel EPDCCH of the cell 1, the cell 2, the cell 3 and the cell 4.

For example, in a case where the downlink assignment/uplink grant information addressed to the mobile station apparatus is detected in the physical downlink control channel PDCCH of the cell 1 in T4, the mobile station apparatus 1-1 extends the monitoring period of the physical downlink control channels PDCCHs or the enhanced physical downlink control channels EPDCCHs of the cell 1 and the cell 2 by the reception extension period. In a case where the downlink assignment/uplink grant information addressed to the mobile station apparatus is detected in the physical downlink control channel PDCCH of the cell 4 in T3, the mobile station apparatus 1-1 extends the monitoring period of the physical downlink control channels PDCCHs or the enhanced physical downlink control channels EPDCCHs of the cell 3 and the cell 4 by the reception extension period.

That is, in a case where the data addressed to the mobile station apparatus is received (detected) in the cell (the cell 1 or the cell 2) of the base station apparatus 3-1, the mobile station apparatus 1-1 extends the monitoring period for the cells (the cell 1 and the cell 2) of the base station apparatus 3-1. That is, in a case where the data addressed to the mobile station apparatus is received in the cell of the first base station apparatus, the mobile station apparatus 1-1 extends the monitoring period for all the cells within a first cell group to which the cells of the first base station apparatus belong. In a case where the data addressed to the mobile station apparatus is received in the cell (the cell 3 or the cell 4) of the base station apparatus 3-2, the mobile station apparatus 1-1 extends the monitoring period for the cells (the cell 3 and the cell 4) of the base station apparatus 3-2. That is, in a case where the data addressed to the mobile station apparatus is received in the cell of the second base station apparatus, the mobile station apparatus 1-1 extends the monitoring period for all the cells within a second cell group to which the cells of the second base station apparatus belong. The cell groups may be the transmission timing groups, or may be groups classified by another identifier.

In a case where the downlink assignment/uplink grant information for the mobile station apparatus 1-1 is transmitted in T4, the base station apparatus 3-1 determines that the mobile station apparatus 1-1 extends the monitoring period of the cells (the cell 1 and the cell 2) of the base station apparatus 3-1 by the reception extension period, and performs the scheduling of the downlink data and uplink data with respect to the mobile station apparatus 1-1 during the reception extension period. In a case where the downlink assignment/uplink grant information for the mobile station apparatus 1-1 is transmitted in T3, the base station apparatus 3-2 determines that the mobile station apparatus 1-1 extends the monitoring period of the cells (the cell 3 and the cell 4) of the base station apparatus 3-2 by the reception extension period, and performs the scheduling of the downlink data and uplink data with respect to the mobile station apparatus 1-1 during the reception extension period.

That is, in a case where the downlink assignment/uplink grant information for the mobile station apparatus 1-1 is transmitted, the base station apparatus 3-1 or the base station apparatus 3-2 determines that the mobile station apparatus 1-1 extends the monitoring period of the cells (the cell 1 and the cell 2) of the base station apparatus 3-1 or the cells (the cell 3 and the cell 4) of the base station apparatus 3-2 by the reception extension period, and performs the scheduling of the downlink data and uplink data with respect to the mobile station apparatus 1-1 during the reception extension period.

In a case where it is determined that the dual connect is configured or in a case where it is determined that the reception extension period is controlled for each base station apparatus (or each cell or each cell group), the mobile station apparatus 1-1 performs the discontinuous reception control for extending the monitoring period for each base station apparatus as described above. In a case where it is not determined that the dual connect is configured or in a case where it is determined that the reception extension period is not controlled for each base station apparatus (or each cell or each cell group), the mobile station apparatus 1-1 extends the monitoring period of the physical downlink control channels PDCCHs or the enhanced physical downlink control channels EPDCCHs for all the cells by the reception extension period in a case where the downlink assignment/uplink grant information addressed to the mobile station apparatus is received in the physical downlink control channel PDCCH in a certain cell.

The mobile station apparatus 1-1 may control the discontinuous reception control for extending the monitoring period for each cell in a frequency band of each cell assigned from the base station apparatus 3-1. That is, in the case of the cells in which the frequency bands of the cells assigned from the base station apparatus 3-1 have the same frequency band (for example, the frequencies of the assigned cells belong to the same 2 GHz band), the mobile station apparatus 1-1 extends the monitoring period of the physical downlink control channels PDCCHs or the enhanced physical downlink control channels EPDCCHs for all the assigned cells by the reception extension period in a case where the downlink assignment/uplink grant information addressed to the mobile station apparatus is received in the physical downlink control channel PDCCH of a certain cell.

In a case of the cells in which the frequency bands of the cells assigned from the base station apparatus 3-1 have different frequency bands (for example, the frequencies of the assigned cells belong to 2 GHz band or 3 GHz band), the mobile station apparatus 1-1 extends the monitoring period for each different frequency band by the reception extension period in a case where the downlink assignment/uplink grant information addressed to the mobile station apparatus is received in the physical downlink control channel PDCCH of a certain cell.

The base station apparatus 3-1 or the base station apparatus 3-2 may notify of information indicating the dual connect at the time of the configuration of the dual connect. The base station apparatus 3-1 or the base station apparatus 3-2 may notify of the discontinuous reception parameter including information indicating the dual connect or information indicating that the reception extension period is controlled for each base station apparatus (or each cell or each cell group). Alternatively, the mobile station apparatus 1-1 may control the reception extension period for each cell or each cell group based on the type of data (for example, the control data and the user data, the QoS, or the logical channel) for each cell or each cell group configured at the time of the configuration of the dual connect.

By doing this, the mobile station apparatus 1-1 at the time of the configuration of the dual connect may not perform the reception process of the cells of the base station apparatus other than the base station apparatus indicated by the downlink assignment/uplink grant, and thus, the power consumption is reduced.

Hereinafter, a case where each base station apparatus of the base station apparatus 3-1 and the base station apparatus 3-2 determines the discontinuous reception parameter will be described.

The base station apparatus 3-1 determines the discontinuous reception parameter (the discontinuous reception start offset, the discontinuous reception cycle (DRX cycle), the discontinuous reception period timer (on duration timer), the reception extension period timer (inactivity timer) and the retransmission period timer (retransmission timer)) configured for the mobile station apparatus 1-1 by the base station apparatus 3-1, and notifies the base station apparatus 3-2 of the determined discontinuous reception parameter.

In a case where the discontinuous reception parameter is received from the base station apparatus 3-1, the base station apparatus 3-2 determines the discontinuous reception parameter configured for the mobile station apparatus 1-1 by the base station apparatus 3-2 based on the discontinuous reception parameter configured for the mobile station apparatus 1-1 by the base station apparatus 3-1.

For example, the base station apparatus 3-2 configures the discontinuous reception cycle configured for the mobile station apparatus 1-1 by the base station apparatus 3-2 to n times (or 1/n times; here, n is an integer) of the discontinuous reception cycle configured for the mobile station apparatus 1-1. In a case where the base station apparatus 3-1 and the base station apparatus 3-2 are not synchronized (the frame numbers of the radio frames transmitted at the same time between the base station apparatuses are different), the base station apparatus 3-2 configures a discontinuous reception start offset value such that the start positions of the discontinuous reception are the same discontinuous reception start position in the mobile station apparatus 1-1. With regard to the reception extension period and the retransmission period, the base station apparatus 3-2 may configure different timer values as a timer value configured for the mobile station apparatus 1-1 by the base station apparatus 3-1 and a timer value configured for the mobile station apparatus 1-1 by the base station apparatus 3-2.

The base station apparatus 3-1 and the base station apparatus 3-2 individually notify the mobile station apparatus 1-1 of the discontinuous reception parameters determined by the base station apparatuses. The base station apparatus 3-2 may notify the base station apparatus 3-1 of the determined discontinuous reception parameter, and the base station apparatus 3-1 may collect the discontinuous reception parameters determined by the base station apparatuses and may notify the mobile station apparatus 1-1 of the collected parameters. The base station apparatus 3-2 may notify the base station apparatus 3-1 of the discontinuous reception parameter, and the base station apparatus 3-1 may determine the discontinuous reception parameter based on the discontinuous reception parameter notified from the base station apparatus 3-2.

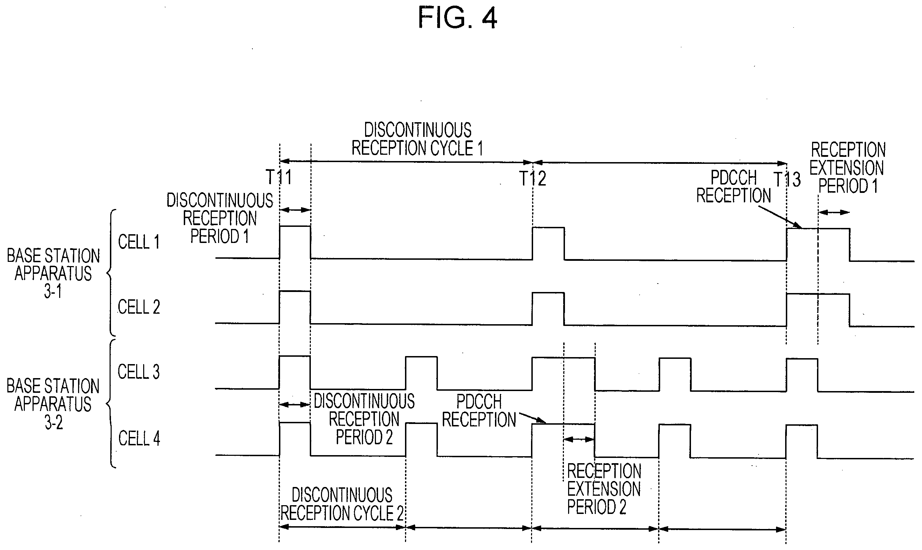

Fig. 4 is a diagram showing an example of the discontinuous reception operation of the mobile station apparatus 1-1 in a case where the discontinuous reception parameters of the base station apparatus 3-1 and the base station apparatus 3-2 are different. Fig. 4 shows an example in which the discontinuous reception cycle (discontinuous reception cycle 1) for the cells (the cell 1 and the cell 2) of the base station apparatus 3-1 is two times of the discontinuous reception cycle (discontinuous reception cycle 2) for the cells (the cell 3 and the cell 4) of the base station apparatus 3-2 and the discontinuous reception periods for the cells (the cell 1 and the cell 2) of the base station apparatus 3-1 and the cells (the cell 3 and the cell 4) of the base station apparatus 3-2 coincide with each other in T11, T12 and T13. The base station apparatus 3-2 determines the discontinuous reception parameter such that some of the discontinuous reception periods coincide with each other in the cells of the base station apparatus 3-1 and the base station apparatus 3-2 as shown in Fig. 4 based on the discontinuous reception parameter notified from the base station apparatus 3-1.

The mobile station apparatus 1-1 applies the discontinuous reception parameter notified from the base station apparatus 3-1 to the cells (the cell 1 and the cell 2) of the base station apparatus 3-1, and applies the discontinuous reception parameter notified from the base station apparatus 3-2 to the cells (the cell 3 and the cell 4) of the base station apparatus 3-2. In a case where the downlink assignment/uplink grant information addressed to the mobile station apparatus is received in the physical downlink control channel PDCCH of the cell 4 in T12, the mobile station apparatus 1-1 extends the monitoring period of the physical downlink control channels PDCCHs or the enhanced physical downlink control channels EPDCCHs of the cell 3 and the cell 4 by the reception extension period.

That is, in a case where the data addressed to the mobile station apparatus is received in the cell (the cell 1 or the cell 2) of the base station apparatus 3-1, the mobile station apparatus 1-1 extends the monitoring period for the cells (the cell 1 and the cell 2) of the base station apparatus 3-1. In a case where the data addressed to the mobile station apparatus is received in the cell (the cell 3 or the cell 4) of the base station apparatus 3-2, the mobile station apparatus 1-1 extends the monitoring period for the cells (the cell 3 and the cell 4) of the base station apparatus 3-2.

By doing this, the base station apparatus 3-1 or the base station apparatus 3-2 can cause the mobile station apparatus 1-1 to perform the discontinuous reception operation depending on a communication condition of each base station apparatus. The mobile station apparatus 1-1 at the time of the configuration of the dual connect reduces the power consumption since the discontinuous reception operation is performed for each base station apparatus.

Although the example of the discontinuous reception operation has been described, the same is true of the control for starting and stopping the discontinuous reception control. In a case where the base station apparatus 3-1 or the base station apparatus 3-2 notifies of the control information indicating the stopping of the discontinuous reception control or the resuming of the discontinuous reception control, the mobile station apparatus 1-1 stops the discontinuous reception control or resumes the discontinuous reception control for the cell of each base station apparatus.

That is, the base station apparatus 3-1 notifies the mobile station apparatus 1-1 of the control information indicating the stopping of the discontinuous reception control/the resuming of the discontinuous reception control, and in a case where the mobile station apparatus 1-1 performs the discontinuous reception control, the mobile station apparatus 1-1 stops the discontinuous reception control for the cells (the cell 1 and the cell 2) of the base station apparatus 3-1. In a case where the mobile station apparatus 1-1 stops the discontinuous reception control, the mobile station apparatus 1-1 resumes the discontinuous reception control for the cells (the cell 1 and the cell 2) of the base station apparatus 3-1.

The base station apparatus 3-2 notifies the mobile station apparatus 1-1 of the control information indicating the stopping of the discontinuous reception control/the resuming of the discontinuous reception control, and in a case where the mobile station apparatus 1-1 performs the discontinuous reception control, the mobile station apparatus 1-1 stops the discontinuous reception control for the cells (the cell 3 and the cell 4) of the base station apparatus 3-2. In a case where the mobile station apparatus 1-1 stops the discontinuous reception control, the mobile station apparatus 1-1 resumes the discontinuous reception control for the cell (the cell 3 and the cell 4) of the base station apparatus 3-2.

In a case where the base station apparatus 3-1 or the base station apparatus 3-2 notifies of the control information indicating the changing of the discontinuous reception cycle, the mobile station apparatus 1-1 changes the discontinuous reception control from the discontinuous reception control at the short-period discontinuous reception cycle to the discontinuous reception control at the long-period discontinuous reception cycle for all the cells of each base station apparatus.

That is, the base station apparatus 3-1 notifies the mobile station apparatus 1-1 of the control information indicating the changing of the discontinuous reception cycle, and in a case where the mobile station apparatus 1-1 performs the discontinuous reception control at the short-period discontinuous reception cycle, the mobile station apparatus 1-1 changes the discontinuous reception cycle for the cells the cell 1 and the cell 2) of the base station apparatus 3-1 to the long-period discontinuous reception cycle, and performs the discontinuous reception control. In a case where the mobile station apparatus 1-1 performs the discontinuous reception control at the long-period discontinuous reception cycle, the mobile station apparatus 1-1 changes the discontinuous reception cycle for the cells (the cell 1 and the cell 2) of the base station apparatus 3-1 to the short-period discontinuous reception cycle, and performs the discontinuous reception control.

The base station apparatus 3-2 notifies the mobile station apparatus 1-1 of the control information indicating the changing of the discontinuous reception cycle, and in a case where the mobile station apparatus 1-1 performs the discontinuous reception control at the short-period discontinuous reception cycle, the mobile station apparatus 1-1 changes the discontinuous reception cycle for the cells (the cell 3 and the cell 4) of the base station apparatus 3-2 to the long-period discontinuous reception cycle, and performs the discontinuous reception control. In a case where the mobile station apparatus 1-1 performs the discontinuous reception control at the long-period discontinuous reception cycle, the mobile station apparatus 1-1 changes the discontinuous reception cycle for the cells (the cell 3 and the cell 4) of the base station apparatus 3-2 to the short-period discontinuous reception cycle, and perfonns the discontinuous reception control.

In a case where the mobile station apparatus 1-1 transmits the scheduling request of the uplink transmission request of the physical uplink shared channel PUSCH to the base station apparatus 3-1 or the base station apparatus 3-2, the mobile station apparatus 1-1 configures the active time for the cells (the cell 1 and the cell 2) of the base station apparatus 3-1 or the cells (the cell 3 and the cell 4) of the base station apparatus 3-2, and monitors the physical downlink control channels PDCCHs or the enhanced physical downlink control channel EPDCCH of the cells (the cell 1 and the cell 2) of the base station apparatus 3-1 or the cells (the cell 3 and the cell 4) of the base station apparatus 3-2.

That is, in a case where the mobile station apparatus 1-1 transmits the scheduling request of the uplink transmission request of the physical uplink shared channel PUSCH to the base station apparatus 3-1, the mobile station apparatus 1-1 configures the active time for the cells (the cell 1 and the cell 2) of the base station apparatus 3-1, and monitors the physical downlink control channels PDCCHs or the enhanced physical downlink control channels EPDCCHs of the cells (the cell 1 and the cell 2) of the base station apparatus 3-1 even though the discontinuous reception control is performed.

In a case where the mobile station apparatus 1-1 transmits the scheduling request of the uplink transmission request of the physical uplink shared channel PUSCH to the base station apparatus 3-2, the mobile station apparatus 1-1 configures the active timer for the cells (the cell 3 and the cell 4) of the base station apparatus 3-2, and monitors the physical downlink control channels PDCCHs or the enhanced physical downlink control channels EPDCCHs of the cells (the cell 3 and the cell 4) of the base station apparatus 3-2 even though the discontinuous reception control is performed.

In a case where the mobile station apparatus 1-1 receives the uplink grant in the physical downlink control channel PDCCH or the enhanced physical downlink control channel EPDCCH and the uplink data including the buffer status report is transmitted in the physical uplink shared channel PUSCH indicated by the uplink grant, the active time due to the scheduling request is ended.

Although the embodiment of the present invention has been described in detail with reference to the drawings, the specific structure is not limited thereto, but various design changes are possible without departing from the gist of the present invention. The base station apparatus 3-1 may be, for example, a cell other than the macrocell, or may be, for example, a small cell.

Although it has been described in the embodiment that an example of the terminal apparatus or the communication apparatus is the mobile station apparatus, the present invention is not limited thereto. The present invention can also be applied to terminal apparatuses or communication apparatuses of stationary or non-movable electronic apparatuses which are installed indoors or outdoors, such as AV apparatuses, kitchen apparatuses, cleaning and washing machines, air conditioners, office apparatuses, vending machines, and other home appliances.

For the sake of convenience in description, the mobile station apparatus 1-1, the base station apparatus 3-1 and the base station apparatus 3-2 of the embodiment have been described with reference to the functional block diagrams. However, the mobile station apparatus or the base station apparatus may be controlled by recording programs for realizing the functions of the respective units of the mobile station apparatus 1-1, the base station apparatus 3-1 and the base station apparatus 3-2 and some of the functions thereof on a computer-readable recording medium and causing a computer system to read and execute the program recorded on the recording medium. The term "computer system" means a computer system that includes an OS or hardware such as peripheral apparatuses.

The term "computer-readable recording medium" means a portable medium, such as a flexible disk, a magneto-optical disk, a ROM, or a CD-ROM, or a storing apparatus such as a hard disc provided in the computer system. The "computer-readable recording medium" may include a recording medium that dynamically stores the program in a short period of time, such as a communication cable used in a case where the program is transmitted through a network, such as the Internet, or a communication line, such as a telephone line, and a recording medium that stores the program for a predetermined period of time, such as a volatile memory in a computer system that serves as a server or a client in this case. The "program" may be a program that realizes some of the above-mentioned functions or a program that implements the above-mentioned functions in combination with the program which has been recorded on the computer system.

The functional blocks used in the embodiment may be realized as LSIs which are typical integrated circuits. Each functional block may be individually integrated into a chip, or some or all of the functional blocks may be integrated into a chip. A method for achieving the integrated circuit is not limited to the LSI, but may be realized by a dedicated circuit or a general-purpose processor. In addition, in a case where a technique for achieving an integrated circuit which replaces the LSI technique will be developed with the progress of a semiconductor technique, the integrated circuit manufactured by the developed technique can also be used.

The embodiment of the present invention has been described with reference to the drawings. However, the detailed structure is not limited to the above-described embodiment and the present invention also includes a change in the design within the scope and spirit of the invention.

### DESCRIPTION OF REFERENCE NUMERALS

- 1-1 to 1-3: Mobile station apparatus
- 3-1, 3-2: Base station apparatus
- 101, 201: Data generating unit
- 103, 203: Transmission data storing unit
- 105, 205: Transmission HARQ processing unit
- 107, 207: Transmission processing unit
- 109, 209: Wireless unit
- 111, 211: Reception processing unit
- 113, 213: Reception HARQ processing unit
- 115, 215: MAC information extracting unit
- 117, 217: PHY control unit
- 119, 219: MAC control unit
- 121, 221: Data processing unit
- 123, 223: RRC control unit
- 225: Inter-base-station-apparatus communication unit
- 227: MME communication unit
- 229: GW communication unit

## Claims

1. A wireless communication system in which a first base station apparatus and a second base station apparatus communicate with a terminal apparatus through a plurality of cells,
wherein the first base station apparatus notifies the second base station apparatus of a first discontinuous reception parameter for allowing the terminal apparatus to perform a discontinuous reception operation with respect to the first base station apparatus, and
the second base station apparatus determines a second discontinuous reception parameter for allowing the terminal apparatus to perform a discontinuous reception operation with respect to the second base station apparatus based on the first discontinuous reception parameter.

2. The wireless communication system according to claim 1,
wherein the second base station apparatus notifies the first base station apparatus of the second discontinuous reception parameter.

3. The wireless communication system according to claim 2,
wherein the first base station apparatus notifies the terminal apparatus of the first discontinuous reception parameter and the second discontinuous reception parameter,
the terminal apparatus periodically monitors control channels of the first base station apparatus and the second base station apparatus by using the first discontinuous reception parameter and the second discontinuous reception parameter,
extends a monitoring period of the control channel corresponding to the first base station apparatus in a case where data addressed to its own terminal apparatus is detected in the control channel of the first base station apparatus, and
extends a monitoring period of the control channel corresponding to the second base station apparatus in a case where data addressed to the own terminal apparatus is detected in the control channel of the second base station apparatus.

4. The wireless communication system according to claim 3,
wherein the second base station apparatus determines a discontinuous reception start offset of the second discontinuous reception parameter in consideration of a fact that the first base station apparatus and the second base station apparatus are not synchronized.

5. The wireless communication system according to claim 4,
wherein the second base station apparatus configures a discontinuous reception cycle of the second discontinuous reception parameter to n times or 1/n times of a discontinuous reception cycle of the first discontinuous reception parameter.

6. A base station apparatus that communicates with a terminal apparatus through a plurality of cells together with a first base station apparatus, the base station apparatus being adapted to:
Receive, from the first base station apparatus, a first discontinuous reception parameter for allowing the terminal apparatus to perform a discontinuous reception operation with respect to the first base station apparatus; and
determine a second discontinuous reception parameter for allowing the terminal apparatus to perform a discontinuous reception operation with respect to its own base station apparatus based on the first discontinuous reception parameter.

7. The base station apparatus according to claim 6,
wherein the base station apparatus determines a discontinuous reception start offset of the second discontinuous reception parameter in consideration of a fact that the first base station apparatus and the own base station apparatus are not synchronized.

8. The base station apparatus according to claim 7,
wherein the base station apparatus configures a discontinuous reception cycle of the second discontinuous reception parameter to n times or 1/n times of a discontinuous reception cycle of the first discontinuous reception parameter.

9. A terminal apparatus that communicates with a first base station apparatus and a second base station apparatus through a plurality of cells, the terminal apparatus being adapted to:
receive a discontinuous reception parameter from the first base station apparatus;
monitor periodically control channels of the first base station apparatus and the second base station apparatus by using the discontinuous reception parameter;
extend a monitoring period of the control, channel corresponding to the first base station apparatus in a case where data addressed to its own terminal apparatus is detected in the control channel of the first base station apparatus; and
extend a monitoring period of the control channel corresponding to the second base station apparatus in a case where data addressed to the own terminal apparatus is detected in the control channel of the second base station apparatus.

10. A wireless communication method of a wireless communication system in which a first base station apparatus and a second base station apparatus communicate with a terminal apparatus through a plurality of cells, the method comprising at least:
a step of notifying, by the first base station apparatus, the second base station apparatus of a first discontinuous reception parameter for allowing the terminal apparatus to perform a discontinuous reception operation with respect to the first base station apparatus;
a step of determining, by the second base station apparatus, a second discontinuous reception parameter for allowing the terminal apparatus to perform a discontinuous reception operation with respect to the second base station apparatus based on the first discontinuous reception parameter; and
a step of notifying the first base station apparatus of the second discontinuous reception parameter.

11. An integrated circuit applied to a base station apparatus that communicates with a terminal apparatus through a plurality of cells together with a first base station apparatus, the integrated circuit comprising:
means for receiving, from the first base station apparatus, a discontinuous reception parameter for allowing the terminal apparatus to perform a discontinuous reception operation with respect to the first base station apparatus; and
means for performing scheduling of a downlink and an uplink for the terminal apparatus in consideration of the discontinuous reception operation of the terminal apparatus based on the discontinuous reception parameter.

12. An integrated circuit applied to a base station apparatus that communicates with a terminal apparatus through a plurality of cells together with a first base station apparatus, the integrated circuit comprising:
means for receiving, from the first base station apparatus, a first discontinuous reception parameter for allowing the terminal apparatus to perform a discontinuous reception operation with respect to the first base station apparatus; and
means for determining a second discontinuous reception parameter for allowing the terminal apparatus to perform a discontinuous reception operation with respect to the base station apparatus based on the first discontinuous reception parameter.

13. An integrated circuit applied to a terminal apparatus that communicates with a first base station apparatus and a second base station apparatus through a plurality of cells, the integrated circuit comprising:
means for receiving a discontinuous reception parameter from the first base station apparatus;
means for periodically monitoring control channels of the first base station apparatus and the second base station apparatus by using the discontinuous reception parameter;
means for extending a monitoring period of the control channel corresponding to the first base station apparatus in a case where data addressed to its own terminal apparatus is detected in the control channel of the first base station apparatus; and
means for extending a monitoring period of the control channel corresponding to the second base station apparatus in a case where data addressed to the own terminal apparatus is detected from the control channel of the second base station apparatus.
